(19) **Europäisches Patentamt / European Patent Office / Office européen des brevets**

(11) **EP 4 345 079 B1**

(12) **FASCICULE DE BREVET EUROPEEN**

(45) Date de publication et mention
de la délivrance du brevet:
**18.06.2025 Bulletin 2025/25**

(21) Numéro de dépôt: **23200654.4**

(22) Date de dépôt: **28.09.2023**

(51) Classification Internationale des Brevets (IPC):
**C03C 25/106** (2018.01)   **C03C 25/16** (2006.01)
**C03C 25/40** (2006.01)   **C03C 25/42** (2006.01)
**C03C 25/47** (2018.01)   **G01K 11/3213** (2021.01)
**H01M 10/0525** (2010.01)   **H01M 10/48** (2006.01)

(52) Classification Coopérative des Brevets (CPC):
**C03C 25/42; C03C 25/40; C03C 25/47;**
**G01K 11/3213; H01M 10/0525; H01M 10/486**

(54) **FIBRE OPTIQUE PORTANT UN FLUOROPHORE INORGANIQUE, SON PROCEDE D OBTENTION, ET SES UTILISATIONS, NOTAMMENT POUR LA MESURE DE LA TEMPERATURE AU SEIN D'UNE BATTERIE**

OPTISCHE FASER MIT ANORGANISCHEM FLUOROPHOR, VERFAHREN ZU IHRER HERSTELLUNG UND IHRE VERWENDUNG, INSBESONDERE ZUR MESSUNG DER TEMPERATUR IN EINER BATTERIE

OPTICAL FIBRE BEARING AN INORGANIC FLUOROPHORE, METHOD FOR OBTAINING SAME, AND USES THEREOF, IN PARTICULAR FOR MEASURING THE TEMPERATURE INSIDE A BATTERY

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **29.09.2022 FR 2209942**

(43) Date de publication de la demande:
**03.04.2024 Bulletin 2024/14**

(73) Titulaire: **Commissariat à l'Energie Atomique et aux Energies Alternatives**
**75015 Paris (FR)**

(72) Inventeurs:
• **Poncelet, Olivier**
**38054 GRENOBLE (FR)**
• **De Sousa Nobre, Sonia**
**38054 GRENOBLE (FR)**

(74) Mandataire: **Gevers & Orès**
**Immeuble le Palatin 2**
**3 Cours du Triangle**
**CS 80165**
**92939 Paris La Défense Cedex (FR)**

(56) Documents cités:
**FR-A1- 3 127 590**

• **LI HANYANG ET AL: "Optical fiber sensor based on upconversion nanoparticles for internal temperature monitoring of Li-ion batteries", JOURNAL OF MATERIALS CHEMISTRY C, vol. 9, no. 41, 28 October 2021 (2021-10-28), GB, pages 14757 - 14765, XP093056142, ISSN: 2050-7526, DOI: 10.1039/D1TC03701C**
• **LI HANYANG ET AL: "Optical fiber sensor based on upconversion nanoparticles for internal temperature monitoring of Li-ion batteries - Electronic supplementary in formation (ESI)", JOURNAL OF MATERIALS CHEMISTRY C, vol. 9, no. 41, 28 October 2021 (2021-10-28), GB, pages 14757 - 14765, XP093056144, ISSN: 2050-7526, DOI: 10.1039/D1TC03701C**
• **MENG MINGZHOU ET AL: "Fluorescence temperature sensing of NaYF4:Yb3+/ Tm3+@NaGdF4:Nd3+/Yb3+ nanoparticles at low and high temperatures", NANOTECHNOLOGY, INSTITUTE OF PHYSICS PUBLISHING, BRISTOL, GB, vol. 33, no. 45, 23 August 2022 (2022-08-23), XP020434142, ISSN: 0957-4484, [retrieved on 20220823], DOI: 10.1088/1361-6528/AC84E4**

EP 4 345 079 B1

• SAVCHUK OLEKSANDR A. ET AL: "Benefits of Silica Core-Shell Structures on the Temperature Sensing Properties of Er,Yb:GdVO 4 Up-Conversion Nanoparticles", APPLIED MATERIALS & INTERFACES, vol. 8, no. 11, 11 March 2016 (2016-03-11), US, pages 7266 - 7273, XP055969327, ISSN: 1944-8244, DOI: 10.1021/ acsami.6b01371

• SCHARTNER ERIK P ET AL: "Simple fabrication method for point temperature sensor probes using erbium ytterbium-coated optical fibres", PROCEEDINGS OF SPIE, IEEE, US, vol. 9157, 22 May 2014 (2014-05-22), pages 91571D - 91571D, XP060041323, ISBN: 978-1-62841-730-2, DOI: 10.1117/12.2059436

**Description**

La présente invention concerne une fibre optique portant, à son extrémité ou une partie de sa surface latérale, un fluorophore inorganique, et son procédé d'obtention. La présente invention vise également les utilisations de ladite fibre optique, notamment pour la mesure de la température, en particulier pour la mesure in situ, voire in operando, de la température d'une batterie, en son sein.

Les avantages de la propulsion électrochimique des véhicules électriques et la nécessité d'un stockage d'énergie efficient à grande échelle, notamment dans les transports, ont induit une demande croissante de batteries hautes performances, c'est-à-dire notamment sûres, efficaces et fiables, dans les appareils électroniques portables et les véhicules électriques. Le développement de batteries plus grandes, avec une densité énergétique plus élevée et des exigences de sécurité plus strictes est ainsi crucial.

Dans ce contexte, les batteries Li-ion ont considérablement progressé au cours des dernières décennies, notamment sur des problématiques allant de la sécurité thermique à la stabilité en cyclage.

Cependant, pour atteindre le prochain niveau d'innovations en matière de batteries Li-ion, il est nécessaire de développer des capteurs pouvant être utilisés pour sonder les batteries en temps réel et in operando, afin de permettre d'optimiser les performances et de déterminer plus précisément l'état des cellules.

En particulier, la conception d'un système efficace de gestion thermique du bloc de batteries (chauffage et refroidissement) est considérée comme essentielle pour garantir la longévité et la sécurité de fonctionnement du bloc. La performance énergétique d'un élément mal géré thermiquement dans un bloc peut en effet être rapidement dégradée. Par exemple, il a été mis en évidence que la capacité d'une cellule située au centre d'un empilement de 5 cellules ensachées (« Pouch ») électriquement connectées en série, après plus de 2000 cycles de charge/décharge appliqués, pouvait perdre presque 50% de sa capacité. En comparaison, une cellule « Pouch » située au sommet de ce même empilement et bénéficiant d'un refroidissement adéquat ne perdait que 13 % de sa capacité. La construction interne de la cellule elle-même, ainsi que la disposition des cellules dans le bloc, doivent en effet être prises en compte lors de la conception du système de gestion thermique. Par exemple, la conception et l'emplacement des languettes du collecteur de courant influencent grandement le niveau de génération et de dissipation de la chaleur. Pour une cellule cylindrique de grand format, une forte augmentation de la température a été décrite en comparant une languette continue à un système à deux languettes (augmentation de 30 % de la génération de chaleur).

Ainsi, une mauvaise conception du système de refroidissement peut entraîner une dégradation plus rapide et élevée des performances et une inhomogénéité dans le niveau de dégradation des cellules individuelles au sein du système dans son ensemble. Ce comportement hétérogène au niveau du système est encore aggravé par la création de "points chauds" dans les cellules et le bloc-batterie, qui peuvent se déplacer au fil du temps, à mesure que le système est chargé/déchargé et que les cellules individuelles vieillissent à des rythmes différents.

Il est donc nécessaire de pouvoir mesurer l'évolution spatiale (et bien entendu temporelle) de la montée de température dans les différentes cellules et dans l'ensemble du pack, car comme présenté ci-dessus, le niveau de production de chaleur dans une cellule de batterie Li-ion et la mauvaise conductivité thermique peuvent entraîner une forte augmentation de la température et des gradients thermiques dans la cellule.

Dans ce contexte, des informations fiables sur la température, et donc des prédictions efficaces sur le vieillissement, l'auto-échauffement, la modélisation électrochimique thermique ainsi que la gestion de la charge des batteries Li-ion, pourraient permettre de contribuer de manière significative au développement des systèmes de stockage d'énergie.

Cependant, les capteurs de surface externes ne fournissent pas une mesure précise des gradients thermiques internes spécifiques et peuvent être influencés par l'environnement externe.

Des capteurs de température interne ont été développés dans ce contexte. Mais le contrôle interne est difficile en raison des milieux chimiquement hostiles et électriquement perturbés. Ces capteurs reposent notamment sur des méthodes de détection utilisant les réseaux de Bragg, l'interférométrie, les ondes évanescentes, la photoluminescence, ou la diffusion sur fibre optique. Cependant, ces capteurs de température interne :

- ne sont généralement pas stables dans les milieux rencontrés à l'intérieur des batteries, en particulier dans les électrolytes, notamment dans les carbonates organiques ; et/ou

- perturbent le fonctionnement des batteries étudiées ; et/ou

- peuvent être perturbés par la présence de sous-produits générés lors du fonctionnement des batteries et/ou des capteurs eux-mêmes, et/ou peuvent être perturbés dans des électrolytes ayant déjà été utilisés (c'est-à-dire de vieux électrolytes).

Hangyang Li et al, J. Mater. Chem. C 2021, 9, 14757 et Mingzough Meng et al, Nanotechnology 2022, 33, 4455502 divulguent l'utilisation d'une fibre optique revêtue de particules de $NaYF_4$:Yb,Er comme capteur de température pour mesurer in situ la température dans des batteries Li-Ion.

Un objectif de l'invention est ainsi de fournir un capteur permettant de mesurer localement, in situ, voire in operando, la température au cœur de la batterie, en particulier au sein de l'électrolyte, et de donner notamment une information en temps réelle qui soit exploitable par le système de contrôle des batteries d'accumulateurs (BMS pour « Battery Management Système »). A cet effet, le capteur de l'invention est chimiquement inerte, en particulier stable dans les électrolytes, notamment dans les carbonates organiques, et ne perturbe pas le fonctionnement de la batterie.

Un autre objectif de l'invention est de fournir un capteur pouvant être facilement obtenu à partir de matériaux usuels (à savoir des fibres optiques).

Encore un autre objectif de l'invention est de fournir un capteur insensible aux interférences électromagnétiques, mais également insensible aux produits et sous-produits pouvant être générés au sein des batteries lors de leur fonctionnement.

Encore un autre objectif de l'invention est de fournir un capteur pouvant facilement être mis en œuvre dans une méthode de mesure simple, rapide, robuste, et peu coûteuse, de la température. Il s'agit d'une simple mesure de fluorescence, qui répond donc aux critères précités. En particulier, les capteurs de l'invention permettent une mesure précise et fiable de la température, notamment dans les intervalles de température critiques car généralement symptomatiques d'un problème de fonctionnement, par exemple l'intervalle 70-100°C.

Ainsi, selon un premier aspect, l'invention concerne une fibre optique dont l'une des extrémités, ou une partie de sa surface latérale, est recouverte d'une couche de silice modifiée par des amines, obtenue à partir d'une composition précurseur de silice constituée de ou comprenant un tetraalkylorthosilicate, dans lequel l'alkyle est un alkyle Y indépendamment choisi les groupes méthyle, éthyle et propyle, et un aminopropyltrialkoxysilane, dans lequel l'alkyle est un alkyl Z indépendamment choisi les groupes méthyle, éthyle et propyle, ladite couche de silice modifiée portant une ou des particules de composé fluorescent inorganique choisi parmi $Gd_2O_2S{:}YbEr$, $GdVO_4{:}YbEr$, en particulier $Gd_{0.88}Er_{0.02}Yb_{0.10}VO_4$.

Selon un mode de réalisation, la couche de silice modifiée recouvre l'une des extrémités de la fibre optique.

Selon un mode de réalisation, la couche de silice est une couche de silice formant un réseau tridimensionnel poreux.

Selon un autre mode de réalisation, la couche de silice est une couche de silice poreuse amorphe. Par "extrémité", on entend en particulier au moins la surface correspondant à l'une des bases de la fibre optique.

Par « bases » de la fibre optique, on entend en particulier les deux surfaces terminales de la fibre optique, ou sections, séparées par la surface latérale de la fibre optique.

Par « au moins la surface correspondant à l'une des bases de la fibre optique », on entend en particulier ladite base, ou ladite base ainsi qu'une portion de la surface latérale à son contact, notamment sur une hauteur de moins de 5000, 4000, 3000, 2000, 1000, 500 ou 250 µm.

Par "alkyle Y", on entend en particulier les quatre alkyles, pouvant être identiques ou différents les uns des autres, portés par le silicate.

En particulier, les groupes de type alkyle Y sont identiques.

Par "alkyle Z", on entend en particulier les trois alkyles, pouvant être identiques ou différents les uns des autres, portés par le silicate.

En particulier, les groupes de type alkyle Z sont identiques.

Plus particulièrement, les groupes de type alkyle Y et Z sont identiques, en particulier éthyle. Par « :YbEr », on entend notamment que le composé précédent la mention « :YbEr » est co-dopé avec $Er^{3+}$ et $Yb^{3+}$.

Selon un mode de réalisation particulier, le diamètre de la fibre optique est compris de 1 à 500 µm, notamment de 10 à 300 µm, en particulier de 50 à 250 µm.

Selon un mode de réalisation particulier, l'épaisseur maximale de la couche de silice modifiée est comprise de 0,1 à 250 µm, notamment de 0,1 à 10, 50, 100, 200 ou 250 µm, voire de 1 à 10, 50, 100, 200 ou 250 µm.

Selon un mode de réalisation particulier, la fibre optique de la présente invention est une fibre optique pour batterie, en particulier pour batterie Li-ion.

Selon un mode de réalisation plus particulier, la fibre optique de la présente invention est une fibre optique pour une mesure, notamment de la température, au sein d'une batterie, en particulier d'une batterie Li-ion.

Selon un mode de réalisation particulier, les particules de composé fluorescent inorganique sont des cristallites.

Selon un mode de réalisation particulier, les particules de composé fluorescent inorganique, en particulier des cristallites, ont une taille moyenne comprise de 0,5 à 16 µm , par exemple environ 8µm.

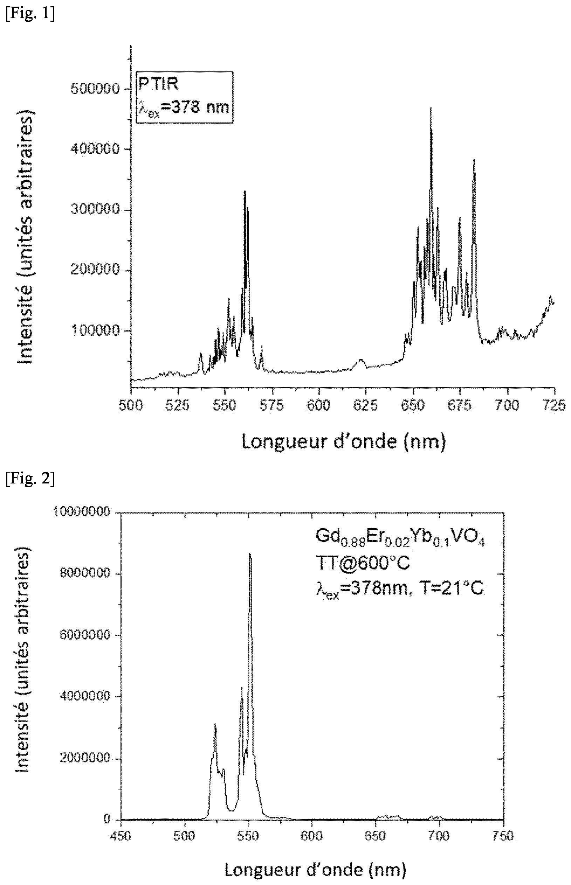

Selon un mode de réalisation particulier, le signal de fluorescence de la fibre optique telle que définie précédemment est telle qu'illustré à la figure 1 ou 2.

Selon un mode de réalisation particulier, au moins l'extrémité ou la partie de sa surface latérale recouverte de la couche de silice modifiée portant les particules de composé fluorescent inorganique est en sus recouverte d'une couche extérieure de protection constituée de ou comprenant du poly(méthacrylate de méthyle) (PMMA) éventuellement fluoré ou bromé.

Les fibres recouvertes de ce vernis protecteur sont susceptibles de pouvoir, si nécessaire, résister des semaines, notamment plus d'un an, dans un mélange de carbonates organiques tel que rencontré dans une batterie Li-ion.

Selon un mode de réalisation particulier, l'épaisseur de la couche extérieure de protection est comprise de 0,5 à 10 μm en particulier de 1 à 2μm.

Selon un mode de réalisation particulier, la fibre optique telle que définie précédemment est choisie parmi les fibres optiques minérales, en particulier les fibres optiques de silice, ou les fibres optiques, en particulier les fibres optiques minérales, plus particulièrement les fibres optiques de silice, portant une couche d'oxyde choisi parmi $TiO_2$, $ZrO_2$, $SnO_2$ ou $HfO_2$.

Selon un mode de réalisation particulier, la fibre optique telle que définie précédemment est pleine ou creuse, en particulier pleine.

Les composés de la présente invention peuvent être préparés par nombre de méthodes bien connues de l'homme de l'art, y compris, mais sans s'y limiter, celles décrites ci-dessous, ou par des modifications de ces méthodes en appliquant des techniques standard connues de l'homme de l'art de la synthèse organique ou inorganique. Les modifications et substitutions appropriées seront facilement apparentes et bien connues ou pourront être facilement obtenues dans la littérature scientifique par l'homme du métier. En particulier, de telles méthodes peuvent être trouvées dans R.C. Larock, Comprehensive Organic Transformations, Wiley-VCH Publishers, 1999.

Tous les procédés divulgués en association avec la présente invention peuvent être réalisés à n'importe quelle échelle, y compris à l'échelle du milligramme, du gramme, du multigramme, du kilogramme, du multikilogramme ou à une échelle industrielle commerciale.

Les composés de la présente invention peuvent être préparés par une variété de voies de synthèse. Les réactifs et les produits de départ sont disponibles dans le commerce, ou facilement synthétisés par des techniques bien connues de l'homme du métier. Tous les substituants, sauf indication contraire, sont tels que définis précédemment.

Selon un autre aspect, la présente invention concerne un procédé de préparation d'une fibre optique telle que définie précédemment, comprenant les étapes suivantes :

(i) une étape de mise en contact d'une extrémité ou d'une partie de la surface latérale d'une fibre optique avec une composition A précurseur de silice constituée de ou comprenant un tetraalkylorthosilicate, dans lequel l'alkyle est un alkyle Y indépendamment choisi les groupes méthyle, éthyle et propyle, et un aminopropyltrialkoxysilane, dans lequel l'alkyle est un alkyl Z indépendamment choisi les groupes méthyle, éthyle et propyle, en présence d'eau, pour obtenir une fibre optique dont l'une des extrémités ou une partie de sa surface latérale porte une couche d'une composition B correspondant à une composition A dans laquelle les groupes alkoxy sont partiellement hydrolysés et éventuellement les produits hydrolysés partiellement condensés ;
(ii) une étape de mise en contact de la couche de composition B portée par l'une des extrémités ou une partie de sa surface latérale de la fibre optique telle qu'obtenue à l'issue de l'étape précédente avec un composé fluorescent inorganique choisi parmi $Gd_2O_2S$:YbEr, $GdVO_4$:YbEr, en particulier $Gd_{0.88}Er_{0.02}Yb_{0.10}VO_4$, sous la forme de poudre pour obtenir une fibre optique dont l'une des extrémités ou une partie de sa surface latérale porte une couche de composition B, laquelle est en contact avec une ou des particules de composé fluorescent inorganique ;
(iii) optionnellement, une étape de mise en contact de la composition B de la fibre telle qu'obtenue à l'issue de l'étape (ii) avec de l'ammoniac pour obtenir une fibre optique dont l'une des extrémités ou une partie de sa surface latérale porte une couche d'une composition C correspondant à une composition B dans laquelle les groupes alkoxy sont totalement hydrolysés et les produits hydrolysés totalement condensés ;
(iv) optionnellement, une étape de dépôt sur l'extrémité ou une partie de la surface latérale de la fibre telle qu'obtenue à l'issue de l'étape précédente d'une couche de protection constituée de ou comprenant du poly(méthacrylate de méthyle) (PMMA), éventuellement fluoré ou bromé ;

au moins l'une des étapes (iii) et (iv) étant nécessairement réalisée.

Tous les modes de réalisation mentionnés à propos de la fibre optique de l'invention s'appliquent également ici, seuls ou en combinaison.

Sans vouloir se restreindre à une quelconque théorie, la composition B est notamment obtenue à partir de la composition A selon une synthèse sol-gel partielle. En effet, cette synthèse est partielle, en ce sens que les groupes alkoxy de la composition A sont seulement partiellement hydrolysés et éventuellement les produits hydrolysés seulement partiellement condensés.

Dans le cadre de l'étape (i), par « mise en contact », on entend une étape dans laquelle pendant tout ou partie de cette étape, l'extrémité ou une partie de la surface latérale de la fibre optique est recouverte d'une composition A, laquelle est en contact avec de l'eau.

Ceci peut par exemple être effectué par :

(1') une première sous-étape de dépôt d'une couche de composition A sur l'extrémité ou une partie de la surface latérale d'une fibre optique ;
(i") une deuxième sous-étape de mise en contact de la couche de composition A portée par l'extrémité ou une partie de la surface latérale de la fibre optique telle qu'obtenue à l'issue de l'étape précédente avec de l'eau, par exemple avec de l'air humide, par exemple de l'air dont l'humidité relative d'environ 50%.

Selon un mode de réalisation particulier, quant à l'étape (i), la composition A est constituée de ou comprenant le tetraalkylorthosilicate et l'aminopropyltrialkoxysilane dans un rapport massique compris de 9/0,5 à 9/3, par exemple environ 9/1.

Selon un mode de réalisation particulier, quant à l'étape (i), la composition A est mise en contact avec l'extrémité ou une partie de la surface latérale de la fibre optique à raison d'1 gramme de cette composition pour un nombre de fibres compris de 50 à 1 par exemple pour 15 fibres.

Selon un mode de réalisation particulier, l'étape (i) est constituée de ou comprend :

  (i') une première sous-étape de dépôt d'une couche de composition A sur l'extrémité ou une partie de la surface latérale d'une fibre optique ;
  (i") une deuxième sous-étape de mise en contact de la couche de composition A portée par l'extrémité ou une partie de la surface latérale de la fibre optique telle qu'obtenue à l'issue de l'étape précédente avec de l'eau, par exemple avec de l'air humide, par exemple de l'air dont l'humidité relative d'environ 50%, pour obtenir une fibre optique dont l'une des extrémités ou une partie de sa surface latérale porte une couche d'une composition B correspondant à une composition A dans laquelle les groupes alkoxy sont partiellement hydrolysés et éventuellement les produits hydrolysés partiellement condensés.

Selon un mode de réalisation plus particulier, la mise en contact de l'étape (i") est réalisée :

- Pendant une durée de comprise de 5 minutes à 2 heures, par exemple pendant environ 10 minutes ;
- Avec de l'air à une température comprise de 15 à 35 °C, par exemple à environ 25°C ; et/ou
- Avec de l'air dont l'humidité relative est comprise de 30 à 90%, par exemple d'environ 50%.

L'étape (ii) peut être réalisée par l'une des techniques bien connues de l'homme du métier, par exemple par trempage de l'extrémité ou d'une partie de la surface latérale de la fibre optique portant la couche de composition B avec une composition pulvérulente du composé fluorescent inorganique.

Lors de l'étape (iii), la mise en contact avec de l'ammoniac peut être effectuée à l'aide d'ammoniac pur ou d'une composition gazeuse comprenant de l'ammoniac, par exemple un mélange air/ammoniac, ou par exemple dans un milieu clos comprenant en sus de l'ammoniaque. Dans ce dernier cas, l'ammoniac en équilibre dans l'atmosphère du milieu clos avec l'ammoniaque peut ainsi réagir avec la composition B.

Selon un mode de réalisation particulier, la mise en contact de l'étape (iii) est réalisée pendant une durée de comprise de 5 minutes à 1 heure, par exemple pendant environ 10 minutes.

Selon un mode de réalisation particulier, la fibre peut, à l'issue de l'étape (iii), et préalablement à l'étape (iv) lorsqu'elle existe, être séchée, notamment à une température comprise de 45 à 90°C, par exemple à environ 50°C, et/ou pendant 1 à 3 heures, par exemple pendant environ 2 heures. Selon un mode de réalisation particulier, l'étape (iv) est réalisée par mise en contact de l'extrémité ou d'une partie de la surface latérale de la fibre telle qu'obtenue à l'issue de l'étape précédente avec une solution de poly(méthacrylate de méthyle) (PMMA) éventuellement fluoré ou bromé dans un solvant organique, par exemple le dichlorométhane.

En particulier, cette solution contient le PMMA à raison de 1 à 7 % massique, par exemple à raison d'environ 3% massique.

Selon un mode de réalisation particulier, le PMMA a une masse moléculaire comprise de 50000 à 200000, en particulier d'environ 135000.

Selon un mode de réalisation particulier, la fibre peut, à l'issue de l'étape (iv), être séchée, notamment à une température comprise de 25 à 80°C par exemple à une température comprise de 15 à 30°C, et/ou pendant 2 à 24h, par exemple pendant environ 12 heures.

Selon un mode de réalisation particulier, l'étape (iii) est réalisée et l'étape (iv) n'est pas réalisée. Selon un mode de réalisation particulier, l'étape (iii) n'est pas réalisée et l'étape (iv) est réalisée. Selon un mode de réalisation particulier et préféré, l'étape (iii) et l'étape (iv) sont réalisées.

Selon un mode de réalisation particulier, les particules de composé fluorescent inorganique sont obtenues par nucléation hydrothermale par exemple à 453°K, puis éventuel recuit, notamment à une température comprise de 600 à 1500°K, par exemple à 873, 1073 ou 1275°K.

Selon un mode de réalisation particulier, les particules de composé fluorescent inorganique obtenues à l'issue du procédé de nucléation hydrothermale ne sont pas broyées préalablement à l'étape (ii).

Les fibres optiques commerciales portent généralement une gaine plastique de protection. Lorsqu'une telle fibre est utilisée dans le cadre de la présente invention, elle peut être préparée selon l'une des techniques bien connues de l'homme du métier.

Par exemple :

- la gaine plastique d'une telle fibre optique peut être retirée, totalement ou au moins sur l'une de ses extrémités ou sur une partie de sa surface latérale ;
- la fibre optique telle qu'obtenue à l'issue de l'étape précédente peut être lavée à l'aide d'un solvant organique, en particulier aprotique, par exemple de l'acétone, notamment sous ultrasons ;
- si nécessaire, la fibre optique ainsi obtenu peut être conservée dans un solvant organique anhydre, en particulier aprotique, par exemple de l'acétone anhydre ;
- la fibre optique peut ensuite être laissée à l'air libre, par exemple pendant environ 30 minutes, et/ou à température ambiante, par exemple à environ 25°C, et/ou l'air ayant une humidité relative d'environ 50%.

Ou par exemple :

- la gaine plastique d'une telle fibre optique peut être retirée, totalement ou au moins sur l'une de ses extrémités ou sur une partie de sa surface latérale ;
- la fibre optique telle qu'obtenue à l'issue de l'étape précédente peut être lavée à l'aide d'un solvant organique, en particulier aprotique, par exemple de l'acétone, mélangé à de l'eau, par exemple contenant 4% en masse d'eau, par exemple pendant environ 30 minutes, et/ou à température ambiante, par exemple à environ 25°C.

Selon un autre aspect, l'invention concerne une fibre optique susceptible d'être obtenue par le procédé tel que défini précédemment.

Selon un autre aspect, l'invention concerne l'utilisation d'une fibre optique telle que définie précédemment, pour mesurer la température.

Selon un mode de réalisation particulier, la température est comprise de -20 à 150°C, notamment de 20 à 100°C, en particulier de 20 à 40°C, ou de 40 à 70°C, ou de 70 à 100°C.

En effet, la fibre de l'invention permet notamment de mesurer de façon précise et fiable une température dans l'intervalle -20 à 150°C, notamment de 20 à 100°C, et en particulier dans l'intervalle 70-100°C, lequel est critique car généralement symptomatique d'un problème de fonctionnement d'une batterie.

Selon un mode de réalisation particulier, la présente invention concerne l'utilisation telle que définie précédemment pour mesurer la température au sein d'une batterie Li-ion, en particulier au sein de l'électrolyte de ladite batterie.

Selon un autre aspect, l'invention concerne un procédé de mesure pour mesurer la température au sein d'un dispositif, notamment au sein d'une batterie Li-ion, comprenant les étapes suivantes :

(i) Optionnellement, une étape de positionnement de l'extrémité ou de la partie de la surface latérale de la fibre optique telle que définie précédemment dans le dispositif dans lequel la température est à mesurer ;
(ii) Une étape d'excitation par transmission de lumière dans ladite fibre optique telle que définie à l'étape (i), ou dans une fibre optique telle que définie précédemment ;
(iii) Une étape de mesure de la fluorescence émise et transmise par ladite fibre optique.

Selon un mode de réalisation particulier, la lumière de l'étape (ii) est une lumière UV ou une lumière visible violette, et a en particulier une longueur d'onde comprise de 350 à 450 nm.

## DEFINITIONS

Tel qu'on l'entend ici, les plages de valeur sous forme de « x-y » ou « de x à y » ou « entre x et y » incluent les bornes x et y ainsi que les entiers compris entre ces bornes. A titre d'exemple, « 1-5 », ou « de 1 à 5 » ou « entre 1 et 5 » désignent les entiers 1, 2, 3, 4 et 5. Les modes de réalisations préférés incluent chaque entier pris individuellement dans la plage de valeur, ainsi que toute sous-combinaison de ces entiers. A titre d'exemple, les valeurs préférées pour « 1-5 » peuvent comprendre les entiers 1, 2, 3, 4, 5, 1-2, 1-3, 1-4, 1-5, 2-3, 2-4, 2-5, etc.

Par « environ » une certaine valeur, on entend notamment cette valeur $\pm 10$ %. Environ 20 correspond donc à 20 $\pm$ 2, soit 18-22.

## FIGURES

La figure 1 présente le spectre d'émission pour une excitation à 378 nm et 21°C d'une fibre optique 1 selon l'exemple 2 portant un composé fluorescent de type Gd2O2S:YbEr (PTIR545F).

La figure 2 présente le spectre d'émission pour une excitation à 378 nm et 21°C d'une fibre optique 2 selon l'exemple 2 portant un composé fluorescent selon l'exemple 1.

La figure 3 présente le FIR (A) et le ln(FIR) (B) en fonction de la température mesurés après excitation à 970 nm de la fibre optique 1, selon l'exemple 3.

La figure 4 présente le FIR (A) et le ln(FIR) (B) en fonction de la température mesurés après excitation à 970 nm de la fibre optique 2, selon l'exemple 3.

## EXEMPLES

Exemple 1 : Préparation d'une poudre de composé fluorescent inorganique

Des microparticules cristallines de GdVO$_4$ co-dopé avec Er$^{3+}$ (2%mol) et Yb$^{3+}$ (10%mol) ont été obtenues par synthèse hydrothermale, selon un protocole adapté de la référence F. Paz-Buclatin et al, Sensors and Actuators A 2019, 299, 111628.

Du métavanadate d'ammonium (CAS 7803-55-6), du nitrate d'ytterbium (CAS : 35725-4-34-9), du nitrate d'erbium (CAS 10031-51-3) et du nitrate de gadolinium (CAS 9598-90-4) ont été utilisés comme réactifs.

La première étape a consisté en la préparation d'une solution avec les quantités requises de nitrates de lanthanides dans de l'eau déminéralisée à température ambiante (par exemple, pour la stœchiométrie Gd$_{0.88}$Er$_{0.02}$Yb$_{0.10}$VO$_4$: Gd(NO$_3$)$_3$.6H$_2$O,18,8 mmol, 8,488 g; Er(NO$_3$)$_3$.5H$_2$O, 0,42 mmol, 0,1895 g ; Yb(NO$_3$)$_3$.5H$_2$O, 0,21 mmol, 0,958 g dans 100 mL d'eau déionisée.

Après une agitation de 30 minutes, la solution est limpide.

Du métavanade d'ammonium (CAS 7803-55-6) (pour la stochiométrie $Gd_{0.88}Er_{0.02}Yb_{0.10}VO_4$: 1,37 mmol, 2,50 g) a été dilué dans 85 ml d'eau désionisée pour obtenir une solution blanche et trouble.

La force motrice de la réaction étant la formation de nitrate de sodium, de l'hydroxyde de sodium solide a été ajouté à la solution trouble sous agitation pendant 1 heure (pour la stochiométrie $Gd_{0.88}Er_{0.02}Yb_{0.10}VO_4$ : 64,11 mmol, 2,565 g). Après 10 minutes d'agitation, la solution est devenue limpide.

La solution de vanadate/hydroxyde de sodium a été ajoutée goutte à goutte pendant 10 minutes à la solution aqueuse de nitrates de lanthanides. Un précipité est immédiatement apparu. L'agitation a été maintenue pendant 30 minutes supplémentaires à température ambiante.

La dispersion a ensuite été traitée hydrothermalement à 453 K pendant 12 heures dans un autoclave scellé et revêtu de téflon d'une capacité de 350 mL.

Après refroidissement de la suspension, le produit obtenu a été séparé par centrifugation (5000 rpm), lavé successivement deux fois avec 180 mL d'eau déminéralisée puis une fois avec de l'éthanol et enfin séché à 353 K pendant 24 heures.

Si nécessaire pour améliorer l'efficacité de l'émission, les échantillons ont optionnellement été recuits à différentes températures (873 K, 1073 K et 1275 K), par exemple pendant 7 heures.

Le produit est ainsi obtenu avec des grains ayant crû jusqu'à 5 $\mu$m.

Ces grains sont utilisés directement, par exemple selon l'exemple 2, sans broyage.

Exemple 2 : Préparation d'une fibre optique fonctionnalisée selon l'invention

Une quarantaine de capteurs, tous fonctionnels car permettant après insertion dans une batterie à électrolytes organiques d'en mesurer précisément la température locale par variation de fluorescence (cf. exemple suivant), ont été obtenus comme suit :

- Des fibres optiques à cœur silice, par exemple de référence FC200LCC ou M137LO3 commercialisée par THORLABS ont été dégaînées à l'une de leurs deux extrémités ;
- Les fibres ont ensuite été lavées à l'acétone, avec de préférence un décapage assisté par ultrason ;
- Les bouts de fibres ainsi lavés ont alors été conservés dans de l'acétone anhydre ;
- les bouts de fibres optiques ont été retirés de l'acétone anhydre puis laissés à l'air libre ; sans vouloir se restreindre à une quelconque théorie, l'acétone s'évapore et les silanols de surface s'hydratent ; cette étape dure 30 minutes à température ambiante (25°C) et à un RH de 50% ;
- un mélange massique (9/1) de tetraéthylorthosilicate/aminopropyl triéthoxsilane est préparé, l'aminopropyl triéthoxsilane étant préalablement distillé si nécessaire ;
- les bouts de fibres optiques ont alors été trempés 10 secondes dans 1g de ce mélange d'alcoxydes, à raison d'1g pour 15 fibres à traiter ;
- les fibres sont alors retirées du milieu alcoxyde, puis laissées à l'air 10 minutes à l'air à 25°C et RH: 50% ; un gel visqueux se forme, toujours sans vouloir se restreindre à une quelconque théorie, à la suite de l'hydrolyse des alcoxydes ;
- Les bouts de fibres sont ensuite trempés dans de la poudre de Gd2O2S:YbEr (PTIR545F ; Phosphor Technology) ou selon l'exemple 1;
- Les bouts de fibres recouverts de fluorophore inorganique ont été placés 10 minutes dans un dessiccateur contenant un fond liquide de NH4OH ; toujours sans vouloir se restreindre à une quelconque théorie, les vapeurs d'ammoniaque terminent l'hydrolyse ;
- Les fibres ont alors été séchées à 50°C pendant 2 heures ;
- Enfin, les fibres ont été plongées dans une solution de CH2Cl2 contenant 3% massique de PMMA (PM: 135000), puis les fibres ont été séchées 12h à température ambiante.

Exemple 3 : Mesure de la température à l'aide d'une fibre optique fonctionnalisée selon l'invention

Thermoluminescence utilisant le rapport d'intensité de fluorescence (ou « fluorescence intensity ratio », FIR).

Parmi les différentes méthodologies permettant de caractériser les paramètres de thermoluminescence (comme par exemple la mesure de la durée de vie et du temps de montée, ou du décalage spectral de l'émission provenant d'une transition donnée), peut être utilisée dans le cadre de l'invention la mesure de l'intensité d'émission, utilisant l'intensité intégrée d'une seule transition ou d'une paire de transitions. Cette méthode de mesure ne nécessite qu'un spectrophotomètre portable à faible coût.

Les deux matériaux fluorescents tels que décrits dans l'exemple précédent sont co-dopés avec le couple de cations lanthanides $Yb^{3+}$, $Er^{3+}$, dont les niveaux $^2H_{11/2}$ -> $^4I_{15/2}$ (H) and $^4S_{3/2}$ -> $^4I_{15/2}$ (S) sont couplés thermiquement et correspondent à des émissions dans le domaine visible (respectivement les émissions verte et rouge).

De plus, le choix de ce couple de cations permet deux voies d'émission accessibles : par « down-conversion » (avec excitation de $Er^{3+}$, procédé direct) ou par « up-conversion » (avec conversion de $Yb^{3+}$, procédé non direct). La mesure de la température repose sur la distribution de Boltzmann (équations 1 et 2 suivantes).

L'équation 1 est la définition du rapport d'intensité de fluorescence (FIR), avec $I_H$ et $I_S$ étant respectivement les intensités maximales sous les transitions $^2H_{11/2} \to {}^4I_{15/2}$ (H) and $^4S_{3/2} \to {}^4I_{15/2}$, kB la constante de Boltzmann, B une constante et $\Delta E$ l'écart énergétique entre les transitions thermiquement couplées :

[Math 1]

$$FIR = \frac{I_H}{I_S} = B \exp\left(-\frac{\Delta E}{kBT}\right) \tag{1}$$

Pour les deux thermoluminophores mentionnés ci-dessus, $I_S$ diminue avec l'augmentation de la température, alors que $I_H$ reste relativement constant avec les variations de température. Il est en outre à noter que la pente des tracés monolog du FIR expérimental avec l'inverse de la température donne accès au coefficient $- \Delta E/kB$. La différence d'énergie $\Delta E$ peut être évaluée par le calcul de l'écart entre les barycentres des transitions thermiquement couplées H et S et l'enveloppe ajustée des transitions intégrées correspondantes.

Pour comparer les propriétés de thermoluminescence des échantillons, les sensibilités (absolue (Sa) et relative (Sr)), l'incertitude de température $\delta T$ et la répétitivité sont des paramètres importants.

La sensibilité absolue est calculée à partir de la pente de la dépendance en température du FIR (équation 2) :

[Math 2]

$$Sa = \frac{dFIR}{dT} = FIR \cdot \frac{DE}{kBT^2} \tag{2}$$

La sensibilité relative est définie par l'équation (3) suivante :

[Math 3]

$$Sr = \frac{1}{|FIR|} \; Sa = \frac{\Delta E}{kBT^2} \tag{3}$$

L'incertitude de température des thermomètres $\delta T$ est définie selon l'équation (4), et correspond à l'incertitude dans la détermination du paramètre FIR estimé par les erreurs dans $I_H$ et $I_S$ :

[Math 4]

$$\delta T = \frac{1}{|Sr|} \; \frac{dFIR}{FIR} \tag{4}$$

Pour vérifier la répétabilité des expériences de thermoluminescence, celles-ci ont été répétées 2 ou 3 fois avec succès pour chaque échantillon.

Les coefficients $\Delta E$ et B ne sont pas indépendants de la température. Une calibration externe est classiquement utilisée pour déterminer la conversion entre le ratio lu de l'intensité d'émission (ou d'intégration) et les températures réelles. Ainsi, une nouvelle calibration est généralement nécessaire pour un même échantillon dans le cas d'un changement d'environnement (par exemple : traitement du matériau permettant un voisinage local de lanthanides, la nature du solvant, l'atmosphère extérieure...).

Pour éviter ces étalonnages répétitifs, il peut être opportun de déterminer les paramètres primaires du thermomètre comme suit. La méthodologie de calibration développée par C. D. S. Brites et L.D. Carlos (J.Phys.Chem.C 2017, 121, 13962-13968) a été utilisée pour ce faire. Pour l' « up conversion », le FIR augmente classiquement de façon linéaire avec la puissance de la source lumineuse. La température $T_0$ correspond à la température de thermoluminescence, où la source lumineuse n'induit pas de chauffage local de l'échantillon (Equation 5, permettant la détermination du paramètre thermométrique $\Delta_0$) dans la limite d'une puissance de pompe nulle :

[Math 5]

$$\Delta_0 = = B \exp\left(-\frac{\Delta E}{kBT_0}\right) \tag{5}$$

Selon la théorie de Judd-Ofelt, la température est calculée comme suit, selon l'équation (6), à partir du paramètre thermométrique $\Delta_0$, de l'écart énergétique $\Delta E$ et du FIR expérimental:

[Math 6]

$$\frac{1}{T} = \frac{1}{T0} - \frac{kB}{\Delta E} \ln\left(\frac{FIR}{\Delta_0}\right) \tag{6}$$

Après avoir remplacé l'écart énergétique estimé $\Delta E$, la valeur estimée de la température absolue $T_0$ et le FIR expérimental dans l'équation 6, la valeur de température calculée est comparée à la température mesurée expérimentalement.

Dans ce contexte, les spectres d'émission pour une excitation à 378 nm et 21°C d'une fibre optique 1 selon l'exemple 2 portant un composé fluorescent de type Gd2O2S:YbEr (PTIR545F) et d'une fibre optique 2 selon l'exemple 2 portant un composé fluorescent selon l'exemple 1 ont été mesurés (figures 1 et 2, respectivement).

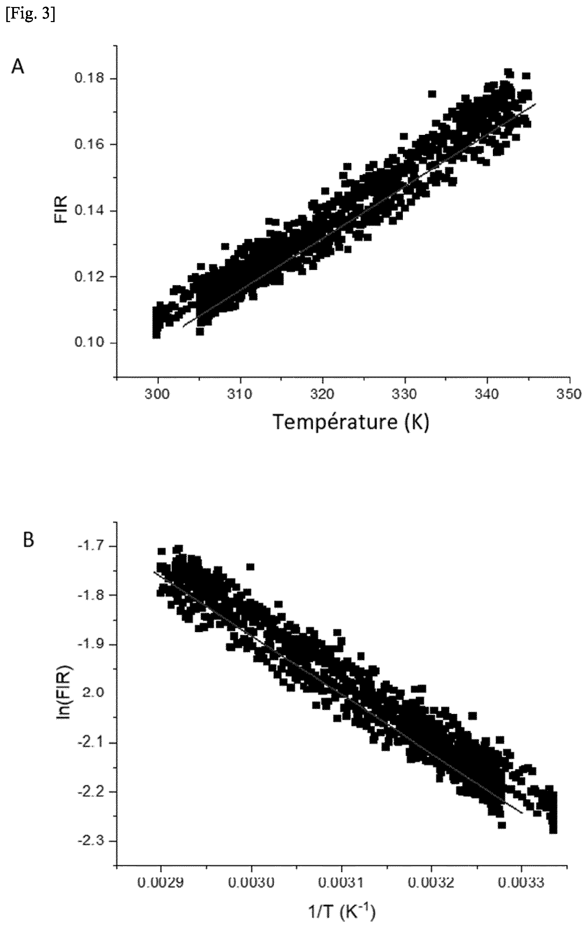

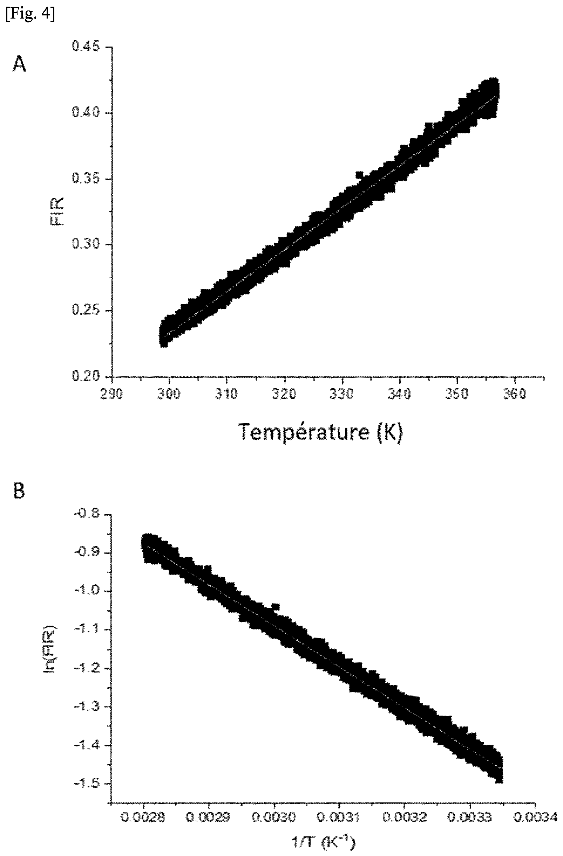

En outre, le FIR et le ln(FIR) en fonction de la température ont également été mesurés après excitation à 970 nm des fibres optiques 1 et 2 (figures 3 et 4, respectivement).

**Revendications**

1. Fibre optique dont l'une des extrémités ou une partie de sa surface latérale est recouverte d'une couche de silice modifiée par des amines, obtenue à partir d'une composition précurseur de silice constituée de ou comprenant un tetraalkylorthosilicate, dans lequel l'alkyle est un alkyle Y indépendamment choisi les groupes méthyle, éthyle et propyle, et un aminopropyltrialkoxysilane, dans lequel l'alkyle est un alkyl Z indépendamment choisi les groupes méthyle, éthyle et propyle, ladite couche de silice modifiée portant une ou des particules de composé fluorescent inorganique choisi parmi Gd2O2S:YbEr, GdVO$_4$:YbEr, en particulier Gd$_{0.88}$Er$_{0.02}$Yb$_{0.10}$VO$_4$.

2. Fibre optique selon la revendication 1, dans laquelle les particules de composé fluorescent inorganique, en particulier des cristallites, ont une taille moyenne comprise de 0,5 à 16 $\mu$m, par exemple environ 8$\mu$m.

3. Fibre optique selon l'une quelconque des revendications précédentes, dans laquelle l'extrémité ou la partie de sa surface latérale recouverte de la couche de silice modifiée portant les particules de composé fluorescent inorganique est en sus recouverte d'une couche extérieure de protection constituée de ou comprenant du poly(méthacrylate de méthyle) (PMMA) éventuellement fluoré ou bromé, dont l'épaisseur est notamment comprise de 0,5 à 10$\mu$m, en particulier de 1 à 2$\mu$m.

4. Fibre optique selon l'une quelconque des revendications précédentes, laquelle est choisie parmi les fibres optiques minérales, en particulier les fibres optiques de silice, ou les fibres optiques, en particulier les fibres optiques minérales, plus particulièrement les fibres optiques de silice, portant une couche d'oxyde choisi parmi TiO$_2$,ZrO$_2$, SnO$_2$ ou HfO$_2$.

5. Procédé de préparation d'une fibre optique selon l'une quelconque des revendications précédentes, comprenant les étapes suivantes :

(i) une étape de mise en contact d'une extrémité ou d'une partie de la surface latérale d'une fibre optique avec une composition A précurseur de silice constituée de ou comprenant un tetraalkylorthosilicate, dans lequel l'alkyle est un alkyle Y indépendamment choisi les groupes méthyle, éthyle et propyle, et un aminopropyltrialkoxysilane, dans lequel l'alkyle est un alkyl Z indépendamment choisi les groupes méthyle, éthyle et propyle, en présence d'eau, pour obtenir une fibre optique dont l'une des extrémités ou une partie de sa surface latérale porte une couche d'une composition B correspondant à une composition A dans laquelle les groupes alkoxy sont partiellement hydrolysés et éventuellement les produits hydrolysés partiellement condensés ;
(ii) une étape de mise en contact de la couche de composition B portée par l'une des extrémités ou une partie de la surface latérale de la fibre optique telle qu'obtenue à l'issue de l'étape précédente avec un composé fluorescent inorganique choisi parmi Gd$_2$O$_2$S:YbEr, GdVO$_4$:YbEr, en particulier Gd$_{0.88}$Er$_{0.02}$Yb$_{0.10}$VO$_4$, sous la forme de poudre pour obtenir une fibre optique dont l'une des extrémités ou une partie de sa surface latérale porte une couche de composition B, laquelle est en contact avec une ou des particules de composé fluorescent inorganique ;
(iii) optionnellement, une étape de mise en contact de la composition B de la fibre telle qu'obtenue à l'issue de l'étape (ii) avec de l'ammoniac pour obtenir une fibre optique dont l'une des extrémités ou une partie de sa surface latérale porte une couche d'une composition C correspondant à une composition B dans laquelle les groupes alkoxy sont totalement hydrolysés et les produits hydrolysés totalement condensés ;
(iv) optionnellement, une étape de dépôt sur au moins l'extrémité ou la partie de la surface latérale de la fibre telle qu'obtenue à l'issue de l'étape précédente d'une couche de protection constituée de ou comprenant du poly(méthacrylate de méthyle) (PMMA) éventuellement fluoré ou bromé ;

au moins l'une des étapes (iii) et (iv) étant nécessairement réalisée.

6. Procédé selon la revendication 5, dans lequel, quant à l'étape (i), la composition A est constituée de ou comprenant le tetraalkylorthosilicate et l'aminopropyltrialkoxysilane dans un rapport massique compris de 9/0,5 à 9/3, par exemple environ 9/1.

7. Procédé selon la revendication 5 ou 6, dans lequel l'étape (i) est constituée de ou comprend :

(i') une première sous-étape de dépôt d'une couche de composition A sur l'extrémité ou une partie de la surface latérale d'une fibre optique ;
(i") une deuxième sous-étape de mise en contact de la couche de composition A portée par l'extrémité ou une partie de la surface latérale de la fibre optique telle qu'obtenue à l'issue de l'étape précédente avec de l'eau, par exemple avec de l'air humide, par exemple de l'air dont l'humidité relative d'environ 50%, pour obtenir une fibre optique dont l'une des extrémités ou une partie de sa surface latérale porte une couche d'une composition B correspondant à une composition A dans laquelle les groupes alkoxy sont partiellement hydrolysés et éventuellement les produits hydrolysés partiellement condensés.

**8.** Procédé selon la revendication 7, dans lequel la mise en contact de l'étape (i") est réalisée :

- Pendant une durée de comprise de 5 minutes à 2 heures, par exemple pendant environ 10 minutes ;
- Avec de l'air à une température comprise de 15 à 35 °C, par exemple à environ 25°C ; et/ou
- Avec de l'air dont l'humidité relative est comprise de 15 à 90% par exemple d'environ 50%.

**9.** Utilisation d'une fibre optique selon l'une quelconque des revendications 1 à 4, pour mesurer la température, laquelle est notamment comprise de -20 à 150°C, en particulier de 20 à 100°C, plus particulièrement de 20 à 40°C, ou de 40 à 70°C, ou de 70 à 100°C, notamment au sein d'une batterie Li-ion.

**10.** Procédé de mesure pour mesurer la température au sein d'un dispositif, notamment au sein d'une batterie Li-ion, comprenant les étapes suivantes :

(i) Optionnellement, une étape de positionnement de l'extrémité ou la partie de la surface latérale de la fibre optique selon l'une quelconque des revendications 1 à 4 dans le dispositif dans lequel la température est à mesurer ;
(ii) Une étape d'excitation par transmission de lumière dans ladite fibre optique, telle que définie à l'étape (i), ou dans une fibre optique selon l'une quelconque des revendications 1 à 4 ;
(iii) Une étape de mesure de la fluorescence émise et transmise par ladite fibre optique.

**Patentansprüche**

**1.** Optische Faser, von der eines der Enden oder ein Teil ihrer seitlichen Oberfläche mit einer Schicht von durch Amine modifiziertes Siliciumdioxid beschichtet ist, das ausgehend von einer Siliciumdioxidvorläuferzusammensetzung erhalten wird, die aus Tetraalkylorthosilikat, wobei das Alkyl ein Alkyl Y ist, unabhängig ausgewählt aus den Gruppen Methyl, Ethyl und Propyl, und einem Aminopropyltrialkoxysilan, wobei das Alkyl ein Alkyl Z ist, unabhängig ausgewählt aus den Gruppen Methyl, Ethyl und Propyl, besteht oder diese umfasst, wobei die Schicht aus modifizierten Siliciumdioxid ein oder mehrere Partikel einer anorganischen fluoreszierenden Verbindung trägt, ausgewählt aus Gd2O2-S:YbEr, GdVO$_4$:YbEr, vor allem Gd$_{0,88}$Er$_{0,02}$Yb$_{0,10}$VO$_4$.

**2.** Optische Faser nach Anspruch 1, wobei die Partikel der anorganischen fluoreszierenden Verbindung, insbesondere die Kristallite, eine mittlere Größe von 0,5 bis 16 $\mu$m aufweisen, zum Beispiel ungefähr 8 $\mu$m.

**3.** Optische Faser nach einem der vorstehenden Ansprüche, wobei das Ende oder das Teil ihrer seitlichen Oberfläche, die mit der Schicht aus modifiziertem Siliciumdioxid beschichtet ist, die die Partikel der anorganische fluoreszierenden Verbindung trägt, zusätzlich mit einer äußeren Schutzschicht bedeckt ist, die aus gegebenenfalls fluoriertem oder bromiertem Poly(methylmethacrylat) (PMMA) besteht oder dieses umfasst, von der die Dicke insbesondere von 0,5 bis 10 $\mu$m, vor allem 1 bis 2 $\mu$m reicht.

**4.** Optische Faser nach einem der vorstehenden Ansprüche, wobei sie ausgewählt ist aus die optischen Mineralfasern, vor allem die optischen Siliciumdioxidfasern, oder die optischen Fasern, vor allem die optischen Mineralfasern, genauer die optischen Siliciumdioxidfasern, die eine Oxidschicht tragen ausgewählt aus TiO$_2$, ZrO$_2$, SnO$_2$ oder HfO$_2$.

**5.** Verfahren zur Herstellung einer optischen Faser nach einem der vorstehenden Ansprüche, das die folgenden Schritte umfasst:

(i) einen Schritt des In-Kontakt-Bringens eines Endes oder eines Teils der seitlichen Oberfläche einer optischen Faser mit einer Siliciumdioxidvorläuferzusammensetzung A, die aus ein Tetraalkylorthosilikat besteht oder dieses umfasst, wobei das Alkyl ein Alkyl Y ist, unabhängig ausgewählt aus den Gruppen Methyl, Ethyl und Propyl, und ein Aminopropyltrialkoxysilan, wobei das Alkyl ein Alkyl Z ist, unabhängig ausgewählt aus den Gruppen Methyl, Ethyl und Propyl, in Gegenwart von Wasser, um eine optische Faser zu erhalten, von der eines der Enden oder ein Teil ihrer seitlichen Oberfläche eine Schicht einer Zusammensetzung B trägt, die einer Zugsamensetzung A entspricht, wobei die Alkoxygruppen teilweise hydrolysiert und gegebenenfalls die hydrolysierten Produkt teilweise kondensiert sind;
(ii) einen Schritt des In-Kontakt-Bringens der Schicht von Zusammensetzung B, die von einem der Enden oder eines Teils der seitlichen Oberfläche der optischen Faser, wie nach Abschluss von dem vorhergehenden Schritt erhalten, getragen wird, mit einer anorganischen fluoreszierenden Verbindung, ausgewählt aus Gd$_2$O$_2$S:YbEr, GdVO$_4$:YbEr, vor allem Gd$_{0,88}$Er$_{0,02}$Yb$_{0,10}$VO$_4$, in Form von Pulver, um eine optische Faser zu erhalten, von der eines der Enden oder ein Teil ihrer seitlichen Oberfläche eine Schicht von Zusammensetzung B trägt, die mit einem oder mehreren Partikeln der anorganischen fluoreszierenden Verbindung in Kontakt vorliegt;

(iii) optional einen Schritt des In-Kontakt-Bringens der Zusammensetzung B der Faser, wie nach Abschluss des Schritts (ii) erhalten, mit Ammoniak, um eine optische Faser zu erhalten, von der eines der Enden oder ein Teil ihrer seitlichen Oberfläche eine Schicht einer Zusammensetzung C trägt, die einer Zusammensetzung B entspricht, wobei die Alkoxygruppen vollständig hydrolysiert und die hydrolysierten Produkte vollständig kondensiert sind;

(iv) optional einen Schritt des Abscheidens auf mindestens dem Ende oder dem Teil der seitlichen Oberfläche der Faser, wie nach Abschluss des vorhergehenden Schritts erhalten, einer Schutzschicht, die aus gegebenenfalls fluoriertem oder bromierten Poly(methylmethacrylat) (PMMA) besteht oder dieses umfasst;

wobei mindestens einer der Schritte (iii) und (iv) zwingend durchgeführt wird.

6. Verfahren nach Anspruch 5, wobei in Bezug auf den Schritt (i) die Zusammensetzung A aus dem Tetraalkylorthosilikat und dem Aminopropyltrialkoxysilan in einem Masseverhältnis von 9:0,5 bis 9:3, zum Beispiel ungefähr 9:1, besteht oder diese umfasst.

7. Verfahren nach Anspruch 5 oder 6, wobei der Schritt (i) besteht aus oder umfasst:

(i') einen ersten Teilschritt des Abscheidens einer Schicht von Zusammensetzung A auf das Ende oder einen Teil der seitlichen Oberfläche einer optischen Faser;

(i") einen zweiten Teilschritt des In-Kontakt-Bringens der Schicht von Zusammensetzung A, die von dem Ende oder einem Teil der seitlichen Oberfläche der optischen Faser, wie nach Abschluss des vorhergehenden Schritts erhalten, getragen wird, mit Wasser, zum Beispiel mit feuchter Luft, zum Beispiel mit Luft, von der die relative Feuchtigkeit ungefähr 50 % beträgt, um eine optische Faser zu erhalten, von der eines der Enden oder ein Teil ihrer seitlichen Oberfläche eine Schicht einer Zusammensetzung B trägt, die einer Zusammensetzung A entspricht, wobei die Alkoxygruppen teilweise hydrolysiert und gegebenenfalls die hydrolysierten Produkte teilweise kondensiert sind.

8. Verfahren nach Anspruch 7, wobei das In-Kontakt-Bringen von Schritt (i") durchgeführt wird:

- während einer Dauer von 5 Minuten bis 2 Stunden, zum Beispiel während ungefähr 10 Minuten;
- mit Luft bei einer Temperatur von 15 bis 35 °C, zum Beispiel bei ungefähr 25 °C; und/oder
- mit Luft, von der die relative Feuchtigkeit von 15 bis 90 % reicht, zum Beispiel ungefähr 50 %.

9. Verwendung einer optischen Faser nach einem der Ansprüche 1 bis 4 zum Messen der Temperatur, die insbesondere von -20 bis 150 °C, vor allem von 20 bis 100 °C, ganz besonders von 20 bis 40 °C oder von 40 bis 70 °C oder von 70 bis 100 °C reicht, insbesondere innerhalb einer Li-Ionen-Batterie.

10. Messverfahren zum Messen der Temperatur innerhalb einer Vorrichtung, insbesondere innerhalb einer Li-Ionen-Batterie, umfassend die folgenden Schritte:

(i) optional einen Schritt zur Positionierung des Endes oder des Teils der seitlichen Oberfläche der optischen Faser nach einem der Ansprüche 1 bis 4 in der Vorrichtung, in der die Temperatur zu messen ist;

(ii) einen Schritt der Anregung durch Übertragung von Licht in der optischen Faser, wie bei Schritt (i) definiert, oder in einer optischen Faser nach einem der Ansprüche 1 bis 4;

(iii) einen Schritt der Messung der von der optischen Faser emittierten und übertragenen Fluoreszenz.

**Claims**

1. An optical fiber, one of the ends of which or part of its lateral surface, is covered with a layer of amine-modified silica, obtained from a silica precursor composition consisting of or comprising a tetraalkylorthosilicate, wherein the alkyl is an alkyl Y independently selected from methyl, ethyl and propyl groups, and an aminopropyltrialkoxysilane, wherein the alkyl is an alkyl Z independently selected from the methyl, ethyl and propyl groups, said modified silica layer carrying particle(s) of inorganic fluorescent compound selected from Gd2O2S:YbEr, GdVO$_4$:YbEr, in particular Gd$_{0.88}$ Er$_{0.02}$ Yb$_{0.10}$VO$_4$.

2. The optical fiber of claim 1, wherein the particles of inorganic fluorescent compound, in particular crystallites, have an average size of between 0.5 and 16 $\mu$m, for example around 8$\mu$m.

3. The optical fiber according to any one of the preceding claims, wherein the end or the part of its lateral surface covered with the modified silica layer carrying the inorganic fluorescent compound particles is additionally covered with an outer protective layer consisting of or comprising poly(methyl methacrylate) (PMMA), optionally fluorinated or brominated, the thickness of which is notably between 0.5 and 10μm, in particular between 1 and 2μm.

4. The optical fiber according to any one of the preceding claims, wherein is selected from the inorganic optical fibers, in particular the silica optical fibers, or the optical fibers, in particular the inorganic optical fibers, more particularly the silica optical fibers, carrying a layer of oxide selected from $TiO_2$, $ZrO_2$, $SnO_2$ or $HfO_2$.

5. A method for preparing an optical fiber according to any one of the preceding claims, comprising the following steps:

(i) a step of contacting one end or part of the lateral surface of an optical fiber with a silica precursor composition A consisting of or comprising a tetraalkylorthosilicate, wherein the alkyl is an alkyl Y independently selected from methyl, ethyl and propyl groups, and an aminopropyltrialkoxysilane, wherein the alkyl is an alkyl Z independently selected from the methyl, ethyl and propyl, in the presence of water, to obtain an optical fiber, one of the ends of which or part of its lateral surface is a layer of a composition B corresponding to a composition A wherein the alkoxy groups are partially hydrolyzed and optionally the hydrolyzed products partially condensed;
(ii) a step of contacting the layer of composition B carried by one of the ends or a part of the lateral surface of the optical fiber as obtained on completion of the preceding step with an inorganic fluorescent compound chosen from $Gd_2O_2S$:YbEr, $GdVO_4$:YbEr, in particular $Gd_{0.88}$ $Er_{0.02}$ $Yb_{0.10}VO_4$, in powder form to obtain an optical fiber, one of the ends of which or part of its lateral surface carries a layer of composition B, which is in contact with one or more particles of inorganic fluorescent compound;
(iii) optionally, a step of contacting the composition B of the fiber as obtained in step (ii) with ammonia to obtain an optical fiber, one of the ends of which or part of its lateral surface carries a layer of a composition C corresponding to a composition B in which the alkoxy groups are totally hydrolyzed and the hydrolyzed products totally condensed;
(iv) optionally, a step of depositing on at least the end or part of the lateral surface of the fiber as obtained in the previous step, a protective layer consisting of or comprising poly(methyl methacrylate) (PMMA), optionally fluorinated or brominated;

at least one of steps (iii) and (iv) is necessarily performed.

6. The method according to claim 5, wherein, with respect to step (i), the composition A consists of or comprises tetraalkylorthosilicate and aminopropyltrialkoxysilane in a weight ratio of between 9/0.5 to 9/3, for example about 9/1.

7. The method according to claim 5 or 6, wherein the step (i) consists of or comprises:

(i') a first sub-step of depositing a layer of composition A on the end or part of the lateral surface of an optical fiber;
(i") a second sub-step of contacting the layer of composition A carried by the end or a part of the lateral surface of the optical fiber as obtained on completion of the preceding step with water, for example with humid air, for example air with a relative humidity of about 50%, to obtain an optical fiber one of the ends of which or a part of its lateral surface carries a layer of a composition B corresponding to a composition A in which the alkoxy groups are partially hydrolyzed and optionally the hydrolyzed products partially condensed.

8. The method according to claim 7, wherein the step (i") is carried out

- For a time of between 5 minutes and 2 hours, e.g. for about 10 minutes;
- With air at a temperature of between 15 and 35°C, e.g. approx. 25°C, and/or
- With air having a relative humidity of between 15 and 90%, e.g. around 50%.

9. An use of an optical fiber according to any one of claims 1 to 4, for measuring temperature, which is notably between -20 and 150°C, in particular between 20 and 100°C, more particularly between 20 and 40°C, or between 40 and 70°C, or between 70 and 100°C, notably within a Li-ion battery.

10. A measuring method for measuring the temperature within a device, in particular, within a Li-ion battery, comprising the following steps:

i) Optionally, a step of positioning the end or part of the lateral surface of the optical fiber according to any one of claims 1 to 4 in the device in which the temperature is to be measured;
ii) An excitation step by transmitting light into said optical fiber, as defined in step (i), or into an optical fiber according to any of claims 1 to 4;
iii) A step for measuring the fluorescence emitted and transmitted by said optical fiber.

[Fig. 1]

[Fig. 2]

[Fig. 3]

[Fig. 4]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **HANGYANG LI et al.** *J. Mater. Chem. C*, 2021, vol. 9, 14757
- **MINGZOUGH MENG et al.** *Nanotechnology*, 2022, vol. 33, 4455502
- **R.C. LAROCK**. Comprehensive Organic Transformations. Wiley-VCH Publishers, 1999
- **F. PAZ-BUCLATIN et al.** *Sensors and Actuators A*, 2019, vol. 299, 111628
- *CHEMICAL ABSTRACTS*, 7803-55-6
- *CHEMICAL ABSTRACTS*, 35725-4-34-9
- *CHEMICAL ABSTRACTS*, 10031-51-3
- *CHEMICAL ABSTRACTS*, 9598-90-4
- **C. D. S. BRITES** ; **L.D. CARLOS**. *J.Phys.Chem.C*, 2017, vol. 121, 13962-13968